# EUROPEAN PATENT APPLICATION

(11) **EP 2 723 121 A2**
(43) Date of publication of application: **23.04.2014**
(21) Application number: 13188855.4
(22) Date of filing: 16.10.2013
(51) Int. Cl.: H04W 28/06

(54) **Frame specification for a wireless network communication**

(30) Priority: 16.10.2012 US 201261714581 P; 16.10.2012 US 201261714473 P; 10.10.2013 US 201314050575
(71) Applicant: STMicroelectronics, Inc., Coppell, TX 75019 (US)
(72) Inventor: Chu, Liwen, San Ramon, CA California 94582 (US); Vlantis, George A., Sunnyvale, CA California 94087-2001 (US)
(74) Representative: Style, Kelda Camilla Karen

(57) **Abstract**

A compressed header format is used for messages transmitted in a wireless network. The compressed header includes a first address field and a frame control field including at least one bit specifying whether the first address is for an access point of the wireless communications network. The frame control field may further include at least one additional bit identifying whether the frame is being relayed by a relay node positioned between the access point and a wireless station. The frame control field may further include at least one further bit identifying whether AID is used for the first address field.

## Description

### TECHNICAL FIELD

Some embodiments relate generally to wireless networks, and more particularly to a frame specification for use in a wireless network (for example, and without limitation, a wireless network conforming to the IEEE 802.11ah wireless network specification).

### BACKGROUND

IEEE 802.11ah is a wireless networking standard which amends the IEEE 802.11-2012 wireless networking standard. Its purpose is support the creation of large groups of communicating wireless stations (STAs) that cooperate to share an air medium while minimizing energy consumption.

The 802.11 ah specification supports operation of low rate 802.11 wireless stations in a sub gigahertz spectrum. The wireless stations are grouped together to minimize contention on the air media. An operational feature is the use relay techniques to extend the reach of each wireless station. Reduced power consumption is supported by the use of predefined wake/doze periods for wireless station operation. Furthermore, the wireless stations are operational to provide high speed data communications under negotiated conditions. The 802.11 ah devices utilize the IEEE 802.11 ac specification with a down sampling to provide narrower channel bandwidths. The channel bandwidth can be 1/2/4/8/16MHz. The range of the network can cover, for example, a one-kilometer area and can provide for the connectivity of thousands of devices (wireless stations STAs) under a single access point (AP).

A Relay configuration is an entity that logically consists of a Relay STA that relays frames between two other devices (such as a wireless station (STA) and an access point (AP)). Thus, the relay functionality allows an access point and wireless stations to exchange frames with one another by the way of a relay represented by the Relay STA. The introduction of a relay allows wireless stations to use higher MCSs and reduce the time the wireless stations stay in active mode. This significantly improves the battery life of all wireless stations in the group. The relay through the Relay STA may also provide connectivity for stations located outside the coverage range of the AP itself and thus extend the physical reach of the wireless network. There is, however, an overhead cost on overall network efficiency and increased complexity with the use of Relay STA stations. To limit this overhead, the relaying function is bi-directional and limited to a maximum of two hops.

With the relay functionality, the frames transmitted between the access point and the Relay STA device need four addresses: the transmitter address (TA), the receiver address (RA), the source address (SA) and the destination address (DA) since more than two hops are required between the source and the destination. This will increase the frame header overhead.

Some embodiments may provide an improved data/management frame specification in support of wireless communication between wireless stations and access points and more particularly in the context of relayed wireless communications through a Relay STA. Some embodiments disclosed herein teach a number of compressed header configurations supporting wireless message communications

In an embodiment, a method comprises generating a message for communication between a first node and a second node of a wireless communications network wherein the message comprises a frame having a compressed header, said compressed header including at least one address field supporting an AID address and a frame control field including at least one bit specifying whether the AID address in said at least one address field is one of a transmitter's identifier of the frame or a receiver's identifier of the frame. In particular, whether the AID address is for an access point of the wireless communications network.

In an embodiment, a method comprises having the wireless station notify the access point through a Relay STA as to a destination address of the frames from the wireless station, wherein the destination address is the also the source address of the frames to the wireless station and the address is the outside BSS address. The access point and the Relay STA record the mapping between the wireless station's address and the outside BSS address.

In an embodiment, a method comprises generating a message at a relay node in a wireless network located for transmission to an access point, said message comprising a frame having a compressed header, said compressed header including a first address field supporting a BSSID address to identify the access point (which is the receiver of the frame), a second address field supporting an AID address to identify the relay node (as transmitter of the frame), a third address field identifying an edge wireless station (as the source of the frame) and a frame control field including at least one bit specifying whether the AID address is for the relay node and at least one additional bit identifying whether the frame is being relayed by the relay node. The access point can then determine the destination and the relay node through the stored mapping between the wireless station's address and the outside BSS address.

In an embodiment, a method comprises generating a message at an access point in a wireless network located for transmission to a relay node, said message comprising a frame having a compressed header, said compressed header including a first address field identifying the relay node as the receiver, a second address field supporting a BSSID address, a third address field storing an address of the wireless station and a frame control field including at least one bit specifying whether the first address field identifies the relay node as the receiver, at least one additional bit identifying whether the frame is being relayed by the relay node and at least one further bit identifying whether AID is used for the first address field. The source can be determined by the access point and the relay node through the stored mapping between the wireless station's address and the outside BSS address.

Some embodiments may provide a compressed header, said compresses header including at least one address field supporting an associated identity address and a frame control field including at least on bit specifying whether the associate identity address in said at least one address field is for one of a transmitter or receiver of said frame.

The foregoing has outlined, rather broadly, features of the present disclosure. Additional features of the disclosure will be described, hereinafter, which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

There is provided according to an aspect a method comprising generating a message for communication between a first node and a second node of a wireless communications network wherein the message may comprise a frame having a compressed header, said compressed header including at least one address field supporting an association identity address and a frame control field including at least one bit specifying whether the association identity address in said at least one address field is for one of a transmitter or receiver of said frame.

The transmitter or receiver may be for a station of the wireless communications network.

The frame may be one of a data frame or management frame.

The data frame may communicate between an access and a relay node and said data frame may transmit between a wireless station and an outside BSS device.

The first node or second node may be the access point.

The first node or second node may be a Relay wireless station.

The frame may not include more than two address fields.

The association identity address may identify a transmitter of the message.

The association identity address may identify a receiver of the message.

The frame may not include a Duration/ID field or a HT Control field.

The further option may include a third address field and the frame control field may include a sub-field including at least one additional bit to identify whether the third address field is present in the header.

The frame may not include a Duration/ID field or a QoS Control field.

The frame further option may include data identifying an address of an outside BSS device.

The frame control field may include a sub-field indicating whether the Relay wireless station is transmitting a relayed frame.

The frame control field may include a sub-field indicating whether association identity is used to identify one of a source or destination of the frame.

The associate identity address may comprise a first plurality of bits identifying a station and a second plurality of bits identifying a traffic category.

The first node and second node may comprise an access point and relay node, and wherein said access point and relay node record a mapping between a wireless station address and a MAC address of an outside the BSS device.

There is provided according to another aspect a method that may comprise generating a message at a relay node in a wireless network located between an access point and a wireless station, said message may comprise a frame having a compressed header, said compressed header including a first address field supporting a basic service set identity address, a second address field supporting an associate identity address, a third address field storing an address of the wireless station and a frame control field including at least one bit specifying whether the association identity address is for the relay node and at least one additional bit identifying whether the frame is being relayed by the relay node.

The basic service set identity address may identify the access point as a receiver of the frame and the associate identity address may identify the relay node as a transmitter of the frame and the third address may identify the wireless station as the source of the frame.

There is provided according to another aspect a method that may comprise generating a message at an access point in a wireless network for communication to a relay node located between the access point and a wireless station, said message may comprise a frame having a compressed header, said compressed header including a first address field identifying the relay node, a second address field supporting a BSSID address, a third address field storing an address of the wireless station and a frame control field including at least one bit specifying whether the first address field identifies the relay node, at least one additional bit identifying whether the frame is being relayed by the relay node and at least one further bit identifying whether AID is used for the first address field.

The first address may identify the relay node as receiver of the frame.

An apparatus may be provided to implement any of the above methods.

A computer program may be provided comprising computer executable code which when run performs any of the above methods.

An apparatus may be provided which is configured to generate a message, said message comprising a frame having a compressed header, said compressed header including a first address field supporting a basic service set identity address, a second address field supporting an association identity address, a third address field storing an address of a wireless station and a frame control field including at least one bit specifying whether the association identity address is for a relay node and at least one additional bit identifying whether the frame is being relayed by the relay node. The apparatus may be provided in a relay node.

An apparatus may be provided which is configured to generate a message said message comprising a frame having a compressed header, said compressed header including a first address field identifying a relay node, a second address field supporting a basic service set identity address, a third address field storing an address of a wireless station and a frame control field including at least one bit specifying whether the first address field identifies the relay node, at least one additional bit identifying whether the frame is being relayed by the relay node and at least one further bit identifying whether association identity is used for the first address field. The apparatus may be provided in an access point.

### BRIEF DESCRIPTION OF THE DRAWINGS

For a more complete understanding of the present disclosure, and the advantages thereof, reference is now made to the following descriptions taken in conjunction with the accompanying drawings, in which:
Fig. 1A illustrates a conventional management frame structure;
Fig. 1B illustrates a convention data frame structure;
Fig. 1C illustrates a management frame structure with a compressed header portion;
Fig. 1D illustrates a data frame structure with a compressed header portion;
Fig. 2 shows a block diagram of a relay configuration;
Fig. 3 illustrates the addressing and transmission of communications in the relay configuration of Fig. 2; and
Fig. 4 illustrates a modified compressed header for a data/management frame in accordance with an embodiment.

Corresponding numerals and symbols in different figures generally refer to corresponding parts unless otherwise indicated. The figures are drawn to clearly illustrate the relevant aspects of embodiments of the present disclosure and are not necessarily drawn to scale. To more clearly illustrate certain embodiments, a letter indicating variations of the same structure, material, or process step may follow a figure number.

### DETAILED DESCRIPTION OF THE DRAWINGS

The smallest channel bandwidth for wireless communications in a wireless network derived, for example, from the 802.11 specification is about 1MHz/2MHz. The main application is a sensor network. Within this available bandwidth and sensor application, it is noted that the overhead of the data/management frame header is quite high. There would be an advantage if the data/management header could be compressed as this would permit wireless stations (STA's) to decrease transmission power or reception power when in communication with other nodes of the network such as wireless access points (APs) or Relay STAs.

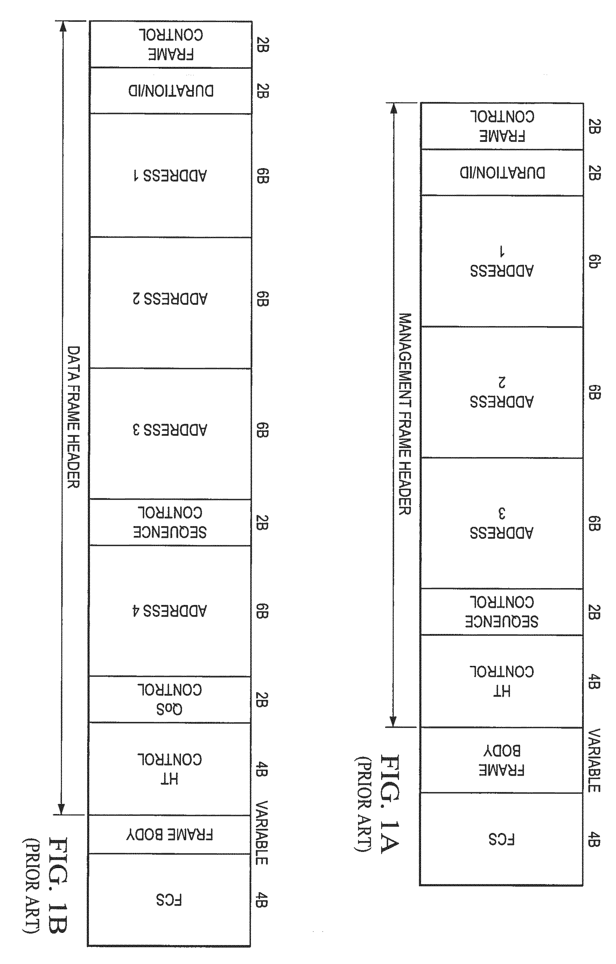

The IEEE 802.11a/b/g/n specification provides for use of a data/management frame with a frame control (FC) field having a configuration well known to those skilled in the art. The known configuration for the management frame is shown in Fig. 1A, and the known configuration for the data frame is shown in Fig. 1B.

There are different kinds of management frames: beacons, probes, association, authentication, action, public action, and the like. It will be noted that different kinds of management frames utilize different address matching rules. Additionally, the management frames can be used for different purposes: association, BSS normal management, communication between STA's in different BSS, and the like.

Fig. 1A illustrates the fields of the conventional management frame in a wireless communications standard such as IEEE 802.11 and Fig. 1B illustrates the fields of the conventional data frame in a wireless communications standard such as IEEE 802.11. The management frame and data frame have similar structures. An embodiment of the present disclosure proposes application of a similar compression technique to the headers of both types of frames.

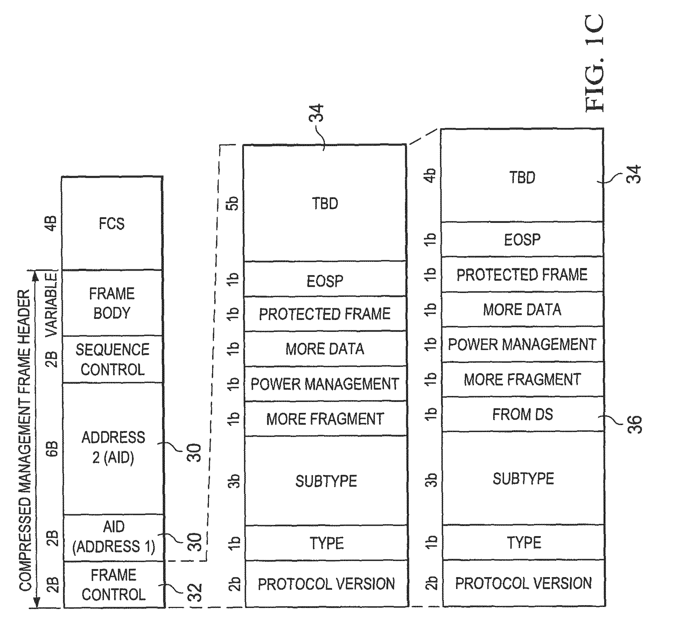

Fig. 1C illustrates a management frame with a compressed header in accordance with an embodiment. In comparison to a conventional management frame as shown in Fig. 1A, the header of the compressed header management frame shown in Fig. 1C does not include the third address field A3 and further utilizes an association ID (AID) field 30 in place of one of the two included addresses (represented by the A1 field or the A2 field). Since the third address field A3 is BSSID for most management frames, and it is the same as the address A1 or address A2, the address field A3 can be safely removed in those management frames. In some management frames, like Probe Request, the address field A3 is not same as the address A1 or address A2, and thus the normal management format is used. In an embodiment, the AID field 30 is provided in place of the previous address field A1 to identify the destination of the management frame. In an alternative embodiment, the AID field 30 is provided in place of the previous address field A2 to identify the transmit source. As an example, the AID is provided to identify the non-AP wireless station STA. Each wireless station that associates with an access point will get a 12-bit AID from the access point after the association with the access point. This AID is used to identify the transmitter or the receiver of a management frame when the transmitter or the receiver is already associated with an access point. Before the association, the normal management frame format is used for the management frame transmission. The public management frame is used for outside BSS communications, while the normal management frame format should be used for the management frame transmission.

If the management frame of Fig. 1C is used for a message being sent to the access point (AP), the AID field 30 includes bits b12-b0 which are set equal to the least significant bits b12-b0 of the transmitter. If the management frame is instead used for a broadcast message, then bits b12-b0 of the AID field 30 are all set equal to logic "1". Bits b15-b13 of the AID field 30 are reserved for other purposes as discussed in detail herein.

Additionally, with respect to the conventional management frame shown in Fig. 1A, the header of the compressed header management frame of Fig. 1C does not include the Duration/ID field or the HT Control field. These fields add unnecessary overhead to the communication.

The frame control (FC) field 32 of the compressed header management frame may include a bit, for example located in the "to be determined" (TBD) sub-field 34, to identify whether the address in the AID field 30 is the address of a particular node in the network (for example, the access point (AP) or other node in the relay). Additionally, the From DS sub-field 36 is used to indicate whether the AID of the wireless station is the transmitter or receiver of the frame. The single bit in the sub-field 36 may indicate logic "1" if the AID is for the receiver and logic "0" if the AID is for the transmitter.

Within the frame control (FC) field 32 a number of sub-fields are included which provide the following information: protocol version (specifying, for example, the use of a compressed header management frame); type (specifying management frame); subtype (specifying quality of service (QoS) or management types for Action, Action no ACK, Disassociation, Deauthentication, etc.); more fragment; power management; more data; protected frame; EOSP and TBD. In an alternative implementation, the subtype sub-field of the frame control field 32 may specify data types or management types. The configuration of these sub-fields is well known to those skilled in the art.

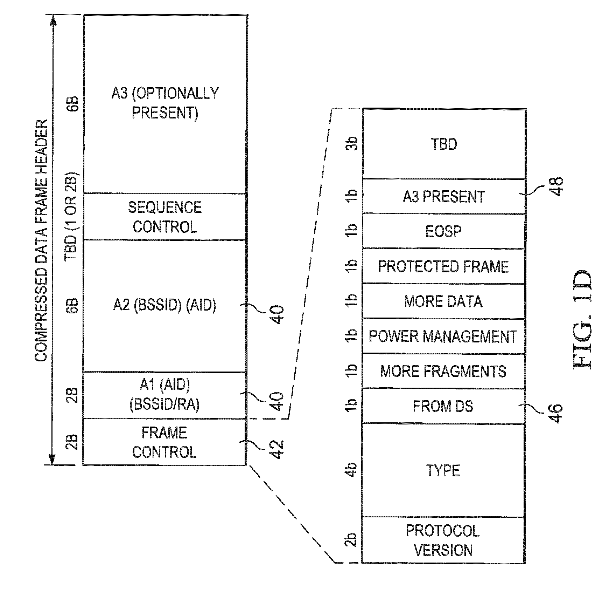

Fig. 1D illustrates a data frame with a compressed header in accordance with an embodiment. In comparison to a conventional data frame shown in Fig. 1B, the header of the compressed header data frame of Fig. 1D makes the address field A3 an optional field and an AID field 40 is used in place of one of the two included addresses (within the A1 field or A2 field). In an embodiment, the AID field 40 is provided in place of the previous address field A1 to identify the receiver of the data frame (with address field A2 storing the BSSID). In an alternative embodiment, the AID field 40 is provided in place of the previous address field A2 to identify the transmit source (with address field A1 storing the BSSID/RA). As an example, the AID is provided to identify the non-AP wireless station STA.

Furthermore, with respect to the conventional data frame shown in Fig. 1B, the header of the compressed header data frame in Fig. 1D does not include the Duration/ID field, address field A4, QoS Control field or the HT Control field. These fields add unnecessary overhead to the communication.

Within the frame control (FC) field 42 a number of sub-fields are included which provide the following information: protocol version (specifying, for example, the use of a compressed header management frame); type (specifying management frame); subtype (specifying quality of service (QoS) or management types for Action, Action no ACK, Disassociation, Deauthentication, etc.); more fragment; power management; more data; protected frame; EOSP and TBD. In an alternative implementation, the subtype sub-field of the frame control field 32 may specify data types or management types. The configuration of these sub-fields is well known to those skilled in the art.

The frame control (FC) field 42 of the compressed header management frame may include a From DS sub-field 46 including a bit to identify whether the AID of the wireless station is the transmitter or receiver of the frame. For example, this single bit may indicate logic "1" if the AID is for the receiver and logic "0" if the AID is for the transmitter.

The frame control (FC) field 42 of the compressed header data frame may include an A3 Present sub-field including a bit to identify whether the header includes the optional address field A3. For example, this single bit may indicate logic "1" if the address A3 is present and logic "0" if the address A3 is not present.

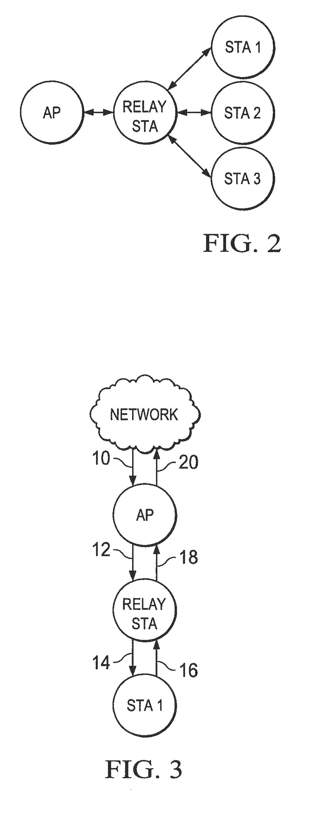

Reference is now made to Fig. 2 which shows a block diagram of a relay configuration including an access point (AP), a relay station (Relay STA) and a plurality of wireless stations (STAx, where x=1 to n, for example stations STA1, STA2 and STA3 are shown) forming a wireless network group. The relay functionality is limited to a maximum of two hops because relay operations with more than two hops are more complicated due to the requirement for the use of routing protocols. An advantage of the relay operation is that the wireless stations STA can reduce their transmission power if their communications need only reach the serving and proximately located Relay STA on the first hop (instead of using higher power to reach the more distant AP directly on one hop).

Reference is now made to Fig. 3 which illustrates the addressing and transmission of communications in the relay configuration of Fig. 1. As shown in Fig. 3, a wireless station (like a sensor) sends its frames to a device in an outside network (like a server in the internet) through the Relay STA and the access point. A server in the outside network sends frames to a wireless station through the access point and the Relay STA.

A first relay communication is established between a source MAC address in the wired network (Net) and a destination MAC address at the wireless station STA1. The wired network originates a message 10 from the source MAC address which is addressed to the destination MAC address. At the access point (AP), a message 12 is generated which has a relay address identifying the Relay STA, a transmit address identifying the access point, a destination address identifying the wireless station STA1 and a source address identifying the source MAC address in the wired network. At the Relay STA, a message 14 is generated which has a relay address identifying the wireless station STA1, a transmit address identifying the Relay STA and a source address identifying the source MAC address in the wired network.

A second relay communication (perhaps a reply to the first communication) is established between a source MAC address at the wireless station STA1 and a destination MAC address in the wired network (Net). The wireless station STA1 originates a message 16 from the source MAC address which is addressed to the destination MAC address and has a relay address identifying the Relay STA, a transmit address identifying the wireless station STA1 and a destination address identifying the destination MAC address in the wired network (Net). At the Relay STA, a message 18 is generated which has a receiver address identifying the access point, a transmit address identifying the Relay STA, a destination address identifying destination MAC address in the wired network and a source address identifying wireless station STA1. At the access point, a message 20 is generated with a destination address identifying destination MAC address in the wired network.

In the messaging operations illustrated in Fig. 3, it will be noted that the address of the access point is not required for the transmission between wireless stations STA and their Relay STA because the link between the access point and the Relay STA is always another hop. Additionally, the address of the wireless station STA is always required for the transmission between the access point and the Relay STA. Lastly, the address of the next hop device which is outside of the basic service set (BSS) is required for the transmissions between the access point and the Relay STA.

Conventional communications between an access point (AP) and a wireless station (STA) may utilize the compressed header data/management frames shown in Figs. 1B and 1D. The compressed header data/management frame format is advantageously used to decrease MAC overhead. The receiver and transmitter are identified in this frame by an address identification (AID) and a MAC address (AID based compression). The receiver and transmitter may also be identified by two MAC addresses (MAC address based compression).

In the context of the relay communications of Fig. 3, however, the compressed data frame does not support the relay. There is no identification between AID based compression and MAC address based compression, and traffic category (TC) is missing from the compressed frame.

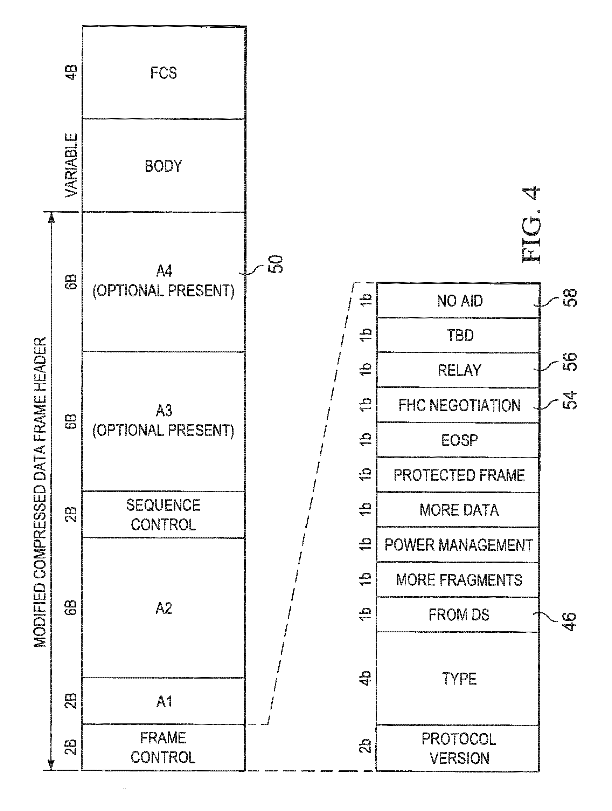

An embodiment proposes a further modification to compressed header data frame as shown in Fig. 4 to support the relay operation.

The modifications include making address field A4 50 optional. With respect to the frame control (FC) field, further proposed modifications include the addition of a frame header compression (FHC) Negotiation sub-field 54, a Relay sub-field 56 and a No AID sub-field 58. Still further, the frame control (FC) field may be modified by deleting the A3 Present frame 48 (see, Fig. 1D) of the compressed data frame header discussed above.

The optional address field A4 30 provides an additional address field for use. See, Figure 3 for instances of addresses needed to support the relaying operation.

One of the A3 field and the A4 field identifies the edge wireless station, and can use an Edge STA identification (ID) field instead of the edge wireless station's 6-byte MAC address in the modified compressed frame.

The Edge STA identification (ID) field provides a field for storing the address of the wireless station STA in the relay communication (for example, indicating the AID of the edge wireless station STA). If the maximum number of supported wireless stations at the edge for relay communications is 256, then the Edge STA identification (ID) field can have a length of one octet (one byte). When the maximum number of supported wireless stations at the edge for relay communications is more than 256, then the Edge STA identification (ID) field 52 can have a length of two octets (two bytes).

The FHC Negotiation sub-field 54 indicates whether the transmitter and receiver negotiate the information (for example, optional information) that can be removed from the modified compressed header data frame (such as the A3 and A4 fields in relay operation mode). For example, this single bit sub-field 54 may indicate logic "1" if negotiation is used and logic "0" if negotiation is not used.

The Relay sub-field 56 indicates whether the Relay STA is transmitting a relayed frame. For example, this single bit sub-field 56 may indicate logic "1" if the frame is a relayed frame and logic "0" if the frame is not a relayed frame.

The No AID sub-field 58 indicates whether there is AID to identify one of the receiver and/or transmitter. For example, this single bit sub-field 58 may indicate logic "1" if AID is used and logic "0" if AID is used. When No AID is set to logic "1", address A1 and address A2 are MAC addresses. When No AID is set to logic "0", one of address A1 and address A2 is AID.

The A1 and A2 fields of the modified compressed header data/management frame may include different information dependent on the From DS indication. When From DS=1, the A1 field including the AID and the A2 field includes the BSSID. Conversely, when From DS=0, the A1 field includes the BSSID or RA and the A2 field includes the AID. With respect to the AID, bits b12-b0 are used to identify the AID. Bits b15-b13 are reserved to identify the traffic category (TC).

When the FHC Negotiation sub-field 54 bit is set at logic "0" to indicate no compression header negotiation and the Relay sub-field 56 bit is set at logic "1", then A3 and A4 are part of the frame header when the frame are transmitted between an access point (AP) and a Relay STA.

When the FHC Negotiation sub-field 54 bit is set at logic "1" to indicate compression header negotiation and the Relay sub-field 56 bit is set at logic "1", then one of address A3 and address A4 can be removed from the compressed frame header when the frame is transmitted between an access point (AP) and a Relay STA. The removed address is always the MAC address of the device which is outside of the BSS. One of address A3 and address A4 which is kept in the compressed frame is the edge STA's identifier. It can be the edge STA's MAC address or edge STA's AID. When the access point receives the compressed data frames from the relay STA, the access point uses the Edge STA's AID or edge STA's MAC address to figure out the MAC address of the device which is outside of the BSS. When the relay STA receives the compressed data frames from the AP, the relay STA uses the edge STA's AID or edge STA's MAC address to figure out the MAC address of the device which is outside of the BSS.

An edge STA notifies the relay STA about the mapping between the edge STA's identifier and the outside MAC address through management frame. The relay STA records the mapping between edge STA's identifier and the outside MAC address. A relay STA forwards the mapping between edge STA's identifier and the outside MAC address through management frame to the AP. The AP records the mapping between the edge STA's identifier and the outside MAC address. Once the AP and the relay STA establishes the mapping between the edge STA's identifier and the outside MAC address, one of address A3 and address A4 can be removed from of the compressed frame header when the frame are transmitted between an access point (AP) and a Relay STA with the FHC Negotiation sub-field 54 bit being set at logic "1".

When the No AID sub-field 58 bit is set at logic "1", then three bits, for example, bits b15-b13, of the AID field are being used to identify the traffic category (TC). When the No AID sub-field 58 bit is set at logic "1", then three bits, for example bits b14-b12, of the FC field are being used to identify the traffic category (TC).

In summary, if FHC negotiation is finished among an edge STA, Relay STA and an access point, then the MAC addresses of the devices outside of the BSS are removed in the modified compressed header data frame for messages, such as the messages 12 and 18 shown in Fig. 3, between the access point (AP) and the Relay STA. Furthermore, if the MAC header compression negotiation is not finished among an edge STA, Relay STA and access point, then four MAC addresses are required for the modified compressed header data frame for messages, such as the messages 12 and 18 shown in Fig. 3, between the access point (AP) and the Relay STA.

It will also be readily understood by those skilled in the art that materials and methods may be varied while remaining within the scope of the present invention. It is also appreciated that the present invention provides many applicable inventive concepts other than the specific contexts used to illustrate embodiments. Accordingly, the appended claims are intended to include within their scope such processes, machines, manufacturing, compositions of matter, means, methods, or steps.

## Claims

1. A method, comprising generating a message for communication between a first node and a second node of a wireless communications network wherein the message comprises a frame having a compressed header, said compressed header including at least one address field supporting an association identity address and a frame control field including at least one bit specifying whether the association identity address in said at least one address field is for one of a transmitter or receiver of said frame.

2. The method of claim 1, wherein the frame is communicated between an access and a relay node and said frame is being transmitted between a wireless station and an outside BSS device.

3. The method of claim 1 or 2 wherein the association identity address identifies one of a transmitter of the message and a receiver of the message.

4. The method of claim 1, 2 or 3, wherein the frame does not include more than two address fields.

5. The method of claim 1, 2 or 3 wherein the frame further optionally includes a third address field and the frame control field includes a sub-field including at least one additional bit to identify whether the third address field is present in the header.

6. The method of any preceding claim, wherein the frame further optionally includes data identifying an address of an outside BSS device.

7. The method of claim 6, wherein the frame control field includes a sub-field indicating whether the Relay wireless station is transmitting a relayed frame.

8. The method of claim 6, wherein the frame control field includes a sub-field indicating whether association identity is used to identify one of a source or destination of the frame.

9. The method of any preceding claim, wherein the associate identity address comprises a first plurality of bits identifying a station and a second plurality of bits identifying a traffic category.

10. The method of any preceding claim, wherein the first node and second node comprise an access point and relay node, and wherein said access point and relay node record a mapping between a wireless station address and a MAC address of an outside the BSS device.

11. A method, comprising generating a message at a relay node in a wireless network located between an access point and a wireless station, said message comprising a frame having a compressed header, said compressed header including a first address field supporting a basic service set identity address, a second address field supporting an association identity address, a third address field storing an address of the wireless station and a frame control field including at least one bit specifying whether the association identity address is for the relay node and at least one additional bit identifying whether the frame is being relayed by the relay node.

12. The method of claim 11, wherein the basic service set identity address identifies the access point as a receiver of the frame and the association identity address identifies the relay node as a transmitter of the frame and the third address identifies the wireless station as the source of the frame.

13. A method, comprising generating a message at an access point in a wireless network for communication to a relay node located between the access point and a wireless station, said message comprising a frame having a compressed header, said compressed header including a first address field identifying the relay node, a second address field supporting a basic service set identity address, a third address field storing an address of the wireless station and a frame control field including at least one bit specifying whether the first address field identifies the relay node, at least one additional bit identifying whether the frame is being relayed by the relay node and at least one further bit identifying whether association identity is used for the first address field.

14. The method of claim 13, wherein the first address identifies the relay node as receiver of the frame.

15. A frame comprising a compressed header, said compressed header including at least one address field supporting an association identity address and a frame control field including at least one bit specifying whether the association identity address in said at least one address field is for one of a transmitter or receiver of said frame.

16. An apparatus configured to generate a message, said message comprising a frame having a compressed header, said compressed header including at least one address field supporting an association identity address and a frame control field including at least one bit specifying whether the association identity address in said at least one address field is for one of a transmitter or receiver of said frame.
